# EUROPÄISCHE PATENTSCHRIFT

(11) **EP 1 936 177 B1**
(45) Veröffentlichungstag und Bekanntmachung des Hinweises auf die Patenterteilung: **17.02.2010**
(21) Anmeldenummer: 07122555.1
(22) Anmeldetag: 06.12.2007
(51) Int. Cl.: F02M 35/10, G10K 11/22

(54) **Frischgasanlage für eine Brennkraftmaschine**
Air intake device for an internal combustion engine
Dispositif d'alimentation d'air pour moteur à combustion interne

(30) Priorität: 07.12.2006 DE 102006058074
(43) Veröffentlichungstag der Anmeldung: 25.06.2008
(73) Patentinhaber: MAHLE International GmbH, 70376 Stuttgart (DE)
(72) Erfinder: Enderich, Andreas, 73734, Esslingen (DE); Zirkelbach, Thomas, 71732, Tamm (DE)
(74) Vertreter: Bongen, Renaud & Partner

(56) Entgegenhaltungen:
- EP-A- 1 306 829
- WO-A-03/102917
- DE-A1- 10 116 169
- DE-A1- 10 212 257

## Beschreibung

Die vorliegende Erfindung betrifft eine Frischgasanlage für eine Brennkraftmaschine, insbesondere in einem Kraftfahrzeug.

Brennkraftmaschinen erzeugen im Betrieb Geräusche, die unter anderem über die Frischgasanlage in die Umgebung emittiert werden. Dabei sind die Fahrzeughersteller bemüht, die Schallemissionen hinsichtlich ihrer Lautstärke niedrig zu halten, während gleichzeitig versucht wird, die Schallemissionen hinsichtlich ihres Klangs entsprechend dem Charakter des Fahrzeugs zu formen, sogenanntes Sounddesign. Eine Vorrichtung zur Schallübertragung des Ansauggeräuschs in den Fahrzeuginnenraum ist bspw. aus der DE 102 12 257 A1 bekannt. Zur Leistungssteigerung von Brennkraftmaschinen ist es bekannt, in der Frischgasanlage eine Ladeeinrichtung anzuordnen. Insbesondere bei der Verwendung eines Abgasturboladers führt dessen Verdichter zu einer Behinderung oder Dämpfung der Schallausbreitung von der Brennkraftmaschine durch die Frischgasanlage, vor allem dann, wenn der Turbolader bei einem erhöhten Leistungsbedarf der Brennkraftmaschine zu deren Aufladung aktiviert ist. Da jedoch gerade bei erhöhter Motorleistung quasi als akustisches Feedback eine Schallemission mit einem charakteristischen Klangmuster erwünscht ist, ergibt sich hier ein Konflikt.

Die vorliegende Erfindung beschäftigt sich mit dem Problem, für eine Frischgasanlage mit Ladeeinrichtung eine verbesserte Ausführungsform anzugeben, die insbesondere eine gezielte Schallemission in die Umgebung verbessert.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Hochdruckseite der Frischgasanlage mit der Niederdruckseite der Frischgasanlage unter Umgehung der Ladeeinrichtung akustisch zu koppeln. Hierdurch ist der dämpfende bzw. behindernde Einfluss der Ladeeinrichtung bei der Schallausbreitung durch die Frischgasanlage erheblich reduziert. Der von der Brennkraftmaschine erzeugte Schall kann bei der erfindungsgemäßen Bauweise von der Hochdruckseite auf die Niederdruckseite gelangen, ohne dabei durch die Ladeeinrichtung zu müssen. In der Folge kann der gewünschte Schall an der Niederdruckseite, vorzugsweise über einen Einlauf der Frischgasleitung in die Umgebung emittiert werden. Erreicht wird dies bei der Erfindung durch eine Kopplung zwischen Hochdruckseite und Niederdruckseite, die eine gasdichte Übertragung von im Frischgas transportierten Druckpulsationen ermöglicht. Dabei sind die im Frischgas transportierten Druckpulsationen der von der Brennkraftmaschine hochdruckseitig in die Frischgasanlage eingeleitete Luftschall. Die Übertragung der Druckpulsationen erfolgt gasdicht, das bedeutet, dass es bei dieser Übertragung zu keinem Gasaustausch und zu keiner Gasströmung zwischen der Hochdruckseite und der Niederdruckseite kommt. In der Folge findet insbesondere auch kein Druckausgleich zwischen Hochdruckseite und Niederdruckseite statt.

Gemäß einer vorteilhaften Ausführungsform erfolgt die Druckpulsationen übertragende Kopplung mittels wenigstens einer schwingungsfähigen, gasdichten Wand, die einerseits die Hochdruckseite und andererseits die Niederdruckseite begrenzt. Unter einer schwingungsfähigen Wand wird im vorliegenden Zusammenhang eine Wand verstanden, die hochdruckseitig durch Druckpulsationen zu Schwingungen anregbar ist und die durch ihre Schwingungen Druckpulsationen in die Niederdruckseite einleitet. Vorzugsweise handelt es sich bei dieser schwingungsfähigen Wand um eine gasdichte Membran, die schwingungsfähig ausgestaltet und/oder schwingungsfähig gehalten ist. Üblicherweise existiert innerhalb einer Frischgasanlage keine Wand, die einerseits die Hochdruckseite und andererseits die Niederdruckseite begrenzt. Die Trennung zwischen Hochdruckseite und Niederdruckseite erfolgt innerhalb der Frischgasanlage durch die in der Frischgasleitung angeordnete Ladeeinrichtung. Die zur akustischen Kopplung dienende Wand bzw. Membran ist jedoch außerhalb der Ladeeinrichtung angeordnet. Hierdurch ermöglicht besagte Wand bzw. Membran die akustische Umgehung der Ladeeinrichtung, um die gewünschte Schallübertragung zwischen Hochdruckseite und Niederdruckseite zu erzielen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

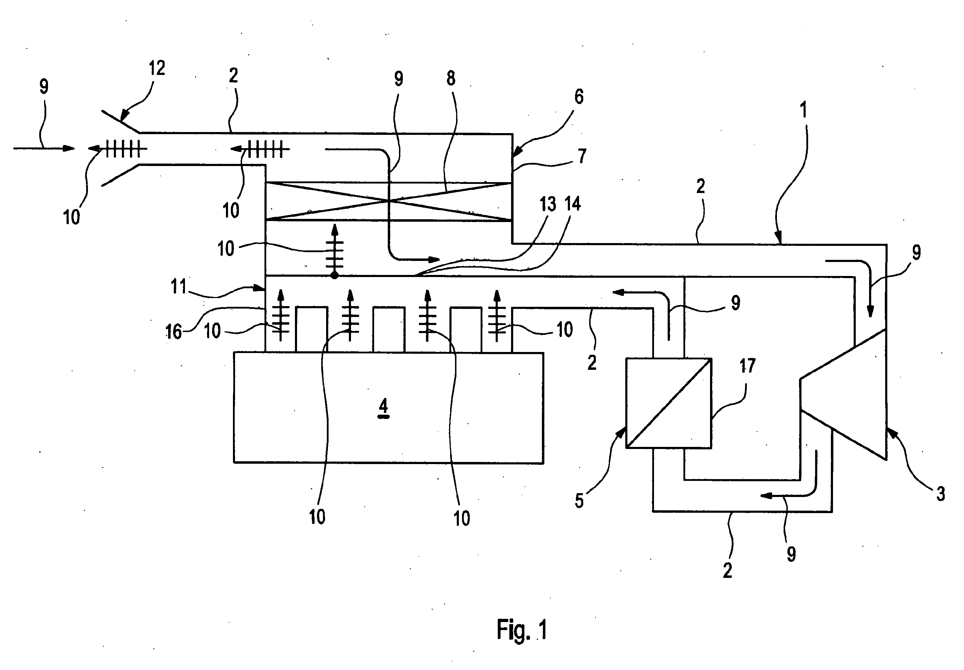

- Fig. 1 bis 7: jeweils eine stark vereinfachte, schaltplanartige Prinzipdarstellung einer Frischgasanlage bei verschiedenen Ausführungsformen.

Entsprechend den Fig. 1 bis 7 umfasst eine Frischgasanlage 1 eine Frischgasleitung 2, in der eine Ladeeinrichtung 3 angeordnet ist. Die Frischgasanlage 1 dient zur Versorgung einer Brennkraftmaschine 4 mit Frischgas, insbesondere Luft, wobei die Brennkraftmaschine 4 und die Frischgasanlage 1 vorzugsweise in einem Kraftfahrzeug angeordnet sind.

Die Ladeeinrichtung 3 ist vorzugsweise ein Verdichter eines Abgasturboladers. Ebenso ist es grundsätzlich möglich, dass es sich bei der Ladeeinrichtung 3 um einen Kompressor, z.B. ein Roots-Gebläse, oder um eine beliebige andere Einrichtung zur Aufladung des Frischgases handeln. Im gezeigten Beispiel weist die Frischgasanlage 1 außerdem einen Wärmeübertrager 5 auf, der zur Kühlung des aufgeladenen Frischgases dient und üblicherweise als Ladeluftkühler bezeichnet wird. Der Wärmeübertrager 5 ist hierzu stromab der Ladeeinrichtung 3 in der Frischgasleitung 2 angeordnet. Außerdem kann die Frischgasanlage 1 ein Frischgasfilter 6 aufweisen, das in einem Gehäuse 7 ein Filterelement 8 zur Reinigung des der Brennkraftmaschine 4 zugeführten Frischgases enthält.

Die Frischgasanlage 1 weist einen Frischgasverteiler 11 auf, der quasi den Auslass der Frischgasleitung 2 bildet und über den die Frischgasleitung 2 an die Brennkraftmaschine 4 angeschlossen ist. Die Frischgasanlage 1 weist noch einen Einlauf 12 auf, der quasi den Einlass der Frischgasleitung 2 bildet und durch den Frischgas aus der Umgebung in die Frischgasleitung 2 gelangt. Die Ladeeinrichtung 3 unterteilt die Frischgasanlage 1 in eine Hochdruckseite, die stromab der Ladeeinrichtung 3 liegt und sich von der Ladeeinrichtung 3 bis einschließlich zum Frischgasverteiler 11 erstreckt, sowie in eine Niederdruckseite, die stromauf der Ladeeinrichtung 3 liegt und die sich vom Einlauf 12 bis zur Ladeeinrichtung 3 erstreckt.

Die sich im Betrieb der Brennkraftmaschine 4 einstellende Gasströmung ist in den Figuren durch Pfeile 9 symbolisiert. Des Weiteren ist durch mit Querstrichen versehene Pfeile 10 Luftschall angedeutet, der im Betrieb der Brennkraftmaschine 4 von dieser in die Hochdruckseite der Frischgasanlage 1 eingeleitet wird. Dieser Luftschall 10 besteht an sich aus im Frischgas transportierten Druckpulsationen, die im folgenden ebenfalls mit 10 bezeichnet werden.

Die Druckpulsationen bzw. der Luftschall der Brennkraftmaschine 4 soll über die Frischgasanlage 1 über deren Niederdruckseite, insbesondere durch deren Einlauf 12 in die Umgebung emittiert werden. Um hierbei den störenden Einfluss der Ladeeinrichtung 3 zu reduzieren, schlägt die Erfindung vor, die Hochdruckseite mit der Niederdruckseite akustisch zu koppeln. Im folgenden werden nun einzelne, beispielhafte Lösungsvorschläge näher erläutert, wobei die gezeigten Ausführungsformen rein exemplarisch und ohne Beschränkung der Allgemeinheit zu verstehen sind.

Bei den Ausführungsformen der Fig. 1 bis 7 wird die akustische Kopplung zwischen Niederdruckseite und Hochdruckseite der Frischgasanlage 1 unter Umgehung der Ladeeinrichtung 3 dadurch realisiert, dass Hochdruckseite und Niederdruckseite zur gasdichten Übertragung von im Frischgas transportierten Druckpulsationen gekoppelt sind. Das bedeutet, dass die im Frischgas hochdruckseitig vorhandenen Druckpulsationen auf geeignete Weise in das niederdruckseitige Frischgas übertragen werden.

Bei den hier gezeigten Ausführungsformen erfolgt die Druckpulsationen übertragende Kopplung zwischen Hochdruckseite und Niederdruckseite mittels wenigstens einer Wand 13, die gasdicht ist, die schwingungsfähig ist und die einerseits die Hochdruckseite und andererseits die Niederdruckseite begrenzt. Das bedeutet, dass besagte Wand 13 an ihrer einen Seite mit dem Hochdruck und an ihrer anderen Seite mit dem Niederdruck beaufschlagt ist. Die Schwingungsfähigkeit der Wand 13 bewirkt, dass hochdruckseitige Druckpulsationen die Wand 13 zu Schwingungen anregen können, wobei die schwingende Wand 13 gleichzeitig niederdruckseitig Druckpulsationen in das Frischgas einleiten kann. Da die Wand 13 gasdicht ist, lassen sich durch die schwingungsfähige Wand die Druckpulsationen ohne Gasaustausch von der Hochdruckseite auf die Niederdruckseite übertragen. Da außerdem die Wand 13 außerhalb der Ladeeinrichtung 3 in der Frischgasanlage 1 angeordnet ist, erfolgt die Übertragung der Druckpulsationen unter Umgehung der Ladeeinrichtung 3.

Vorzugsweise kann es sich bei der Wand 13 um eine gasdichte Membran 14 handeln, die entweder selbst schwingungsfähig ausgestaltet ist oder an sich starr und steif ist, dafür schwingungsfähig gehalten ist. Ebenso ist eine schwingungsfähige Membran 14 mit schwingungsfähiger Halterung denkbar.

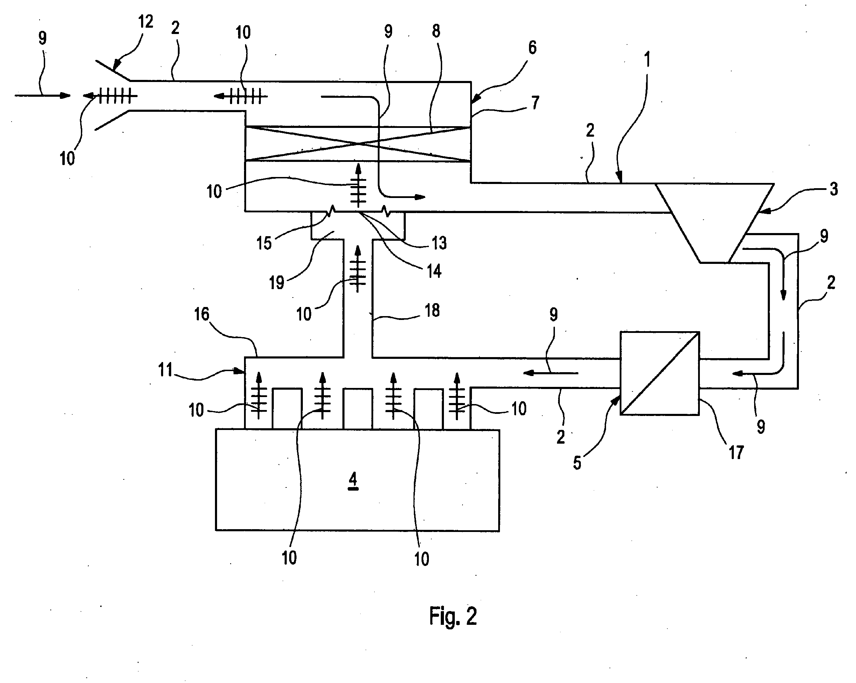

Bei den Fig. 2 bis 6 ist eine derartige schwingungsfähige Halterung angedeutet und mit 15 bezeichnet.

Bei der in Fig. 1 gezeigten Ausführungsform bildet die Wand 13 bzw. die Membran 14 bei zwei verschiedenen Komponenten der Frischgasanlage 1, nämlich hier beim Frischgasverteiler 11 und beim Frischgasfilter 6 einen gemeinsamen Wandabschnitt. Zu diesem Zweck ist ein Gehäuse 16 des Frischgasverteilers 11 direkt mit dem Gehäuse 7 des Frischgasfilters 6 verbaut, derart, dass ein gemeinsamer Wandabschnitt entsteht, der dann die besagte Wand 13 bzw. die Membran 14 bildet oder beinhaltet. Beispielsweise kann das Gehäuse 7 des Frischgasfilters 6 reinseitig offen sein und durch die Montage am Gehäuse 16 des Frischgasverteilers 11 durch besagten gemeinsamen Wandabschnitt verschlossen werden.

Die Ausbildung der Wand 13 bzw. der Membran 14 durch einen gemeinsamen Wandabschnitt bei zwei verschiedenen Komponenten der Frischgasanlage 1 kann beispielsweise auch bei einer Anbindung des Gehäuses 7 des Frischgasfilters 6 an ein Gehäuse 17 des Wärmeübertragers 5 oder an die Frischgasleitung 2 stromab der Ladeeinrichtung 3 realisiert werden. Ebenso kann die Frischgasleitung 2 stromauf der Ladeeinrichtung 3 zusammen dem Gehäuse 16 des Frischgasverteilers 11 oder mit dem Gehäuse 17 des Wärmeübertragers 5 oder mit sich selbst einen gemeinsamen Wandabschnitt aufweisen, der dann besagte Wand 13 bzw. besagte Membran 14 bildet bzw. enthält.

Bei den Ausführungsformen der Fig. 2 bis 6 weist die Frischgasanlage 1 zur Realisierung der akustischen Kopplung zwischen Hochdruckseite und Niederdruckseite eine Kopplungsleitung 18 auf. Die Kopplungsleitung 18 erstreckt sich dabei zwischen der Hochdruckseite und der Niederdruckseite und ermöglicht eine Übertragung von Druckpulsationen über größere Entfernungen. Die Kopplungsleitung 18 ist hierzu hohl, enthält Gas, so dass sich in ihr Luftschall ausbreiten kann. Die Kopplungsleitung 18 kann hierzu mit besagter Wand 13 bzw. mit besagter Membran 14 akustisch gekoppelt sein. Hierzu ist im Bereich der jeweiligen Wand 13 bzw. im Bereich der jeweiligen Membran 14 zweckmäßig eine Kammer 19 angeordnet, welche die jeweilige Wand 13 bzw. die jeweilige Membran 14 einfasst und welche mit der Kopplungsleitung 18 kommuniziert. Bei der in Fig. 2 gezeigten Ausführungsform kommuniziert die Kopplungsleitung 18 einerseits mit der Hochdruckseite, hier mit dem Frischgasverteiler 11, während sie andererseits mit der Kammer 19 kommuniziert, um mittels der an der Niederdruckseite, hier am Frischluftfilter 6, angeordneten Wand 13 bzw. Membran 14 die von der Hochdruckseite kommenden Druckpulsationen auf die Niederdruckseite zu übertragen.

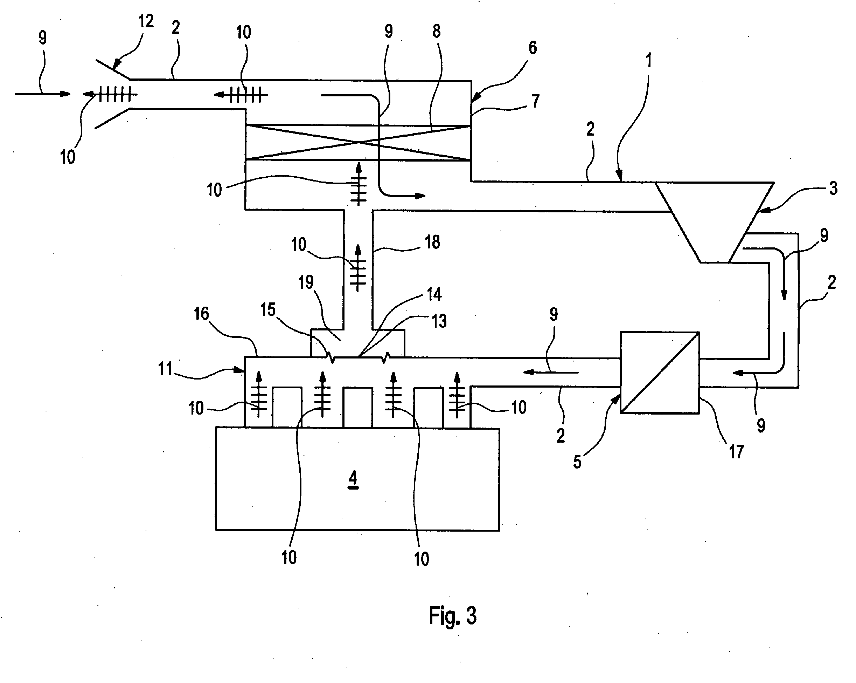

Bei der in Fig. 3 gezeigten Ausführungsform kommuniziert die Kopplungsleitung 18 einerseits mit der Niederdruckseite, hier mit dem Frischgasfilter 6, während sie andererseits mit der Kammer 19 kommuniziert, um über die an der Hochdruckseite, hier am Frischgasverteiler 11 angeordnete Wand 13 bzw.

Membran 14 Druckpulsationen von der Hochdruckseite auf die Niederdruckseite zu übertragen.

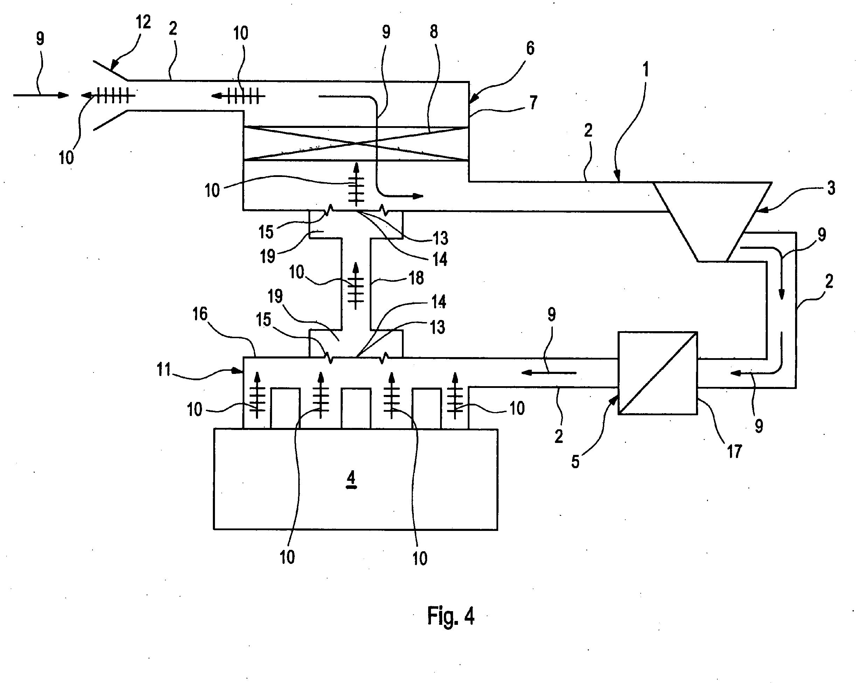

Während die in den Fig. 1 bis 3 und Fig. 5, 6 gezeigten Ausführungsformen jeweils mit einer einzigen Wand 13 bzw. mit einer einzigen Membran 14 zur Realisierung der akustischen Kopplung arbeiten, zeigt Fig. 4 eine Ausführungsform, bei der die akustische Kopplung mit Hilfe von zwei schwingungsfähigen Wänden 13 bzw. mit Hilfe von zwei Membranen 14 realisiert wird. Demnach kommuniziert die Kopplungsleitung 18 hochdruckseitig und niederdruckseitig jeweils mit einer Kammer 19, wobei die eine Kammer 19 eine an der Hochdruckseite, hier beispielsweise am Frischgasverteiler 11, angeordnete Wand 13 bzw. Membran 14 umschließt, während die andere Kammer 19 eine an der Niederdruckseite, hier am Frischgasfilter 6, angeordnete Wand 13 bzw. Membran 14 umschließt.

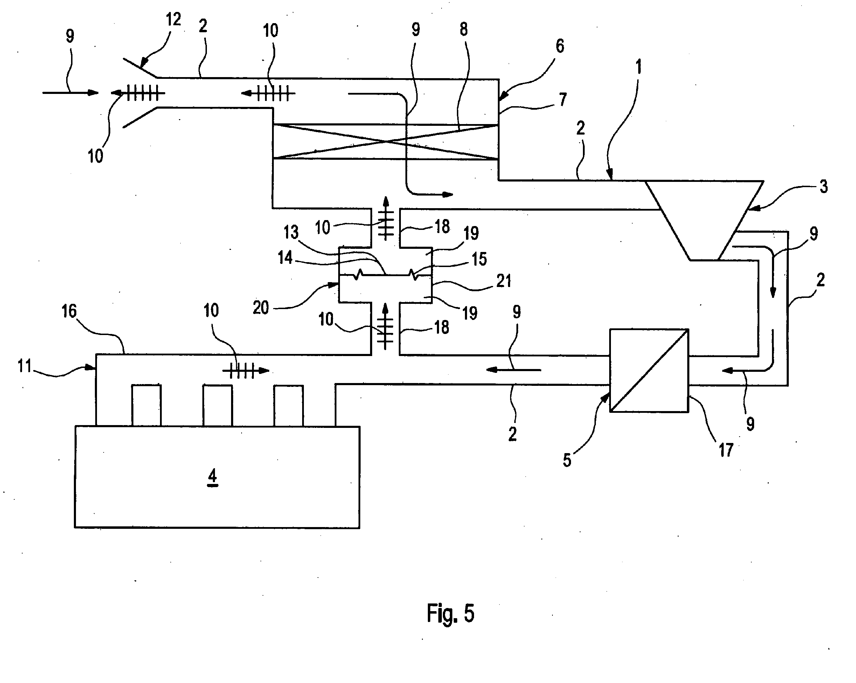

Bei der in Fig. 5 gezeigten besonderen Ausführungsform ist die Frischgasanlage 1 mit einer Kopplungseinrichtung 20 ausgestattet. Diese Kopplungseinrichtung 20 weist ein Gehäuse 21 auf. Dieses Gehäuse 21 ist in die Kopplungsleitung 18 eingebunden und enthält eine schwingungsfähige Wand 13 bzw. eine schwingungsfähige Membran 14. Die Wand 13 bzw. die Membran 14 trennt im Gehäuse 21 zwei Kammern 19 gasdicht voneinander, wobei jede dieser Kammern 19 die Wand 13 bzw. die Membran 14 umschließt. Die eine Kammer 19 kommuniziert über einen Abschnitt der Kopplungsleitung 18 mit der Hochdruckseite und bildet dadurch eine hochdruckseitige Kammer 19. Die andere Kammer 19 kommuniziert über einen entsprechenden Abschnitt der Kopplungsleitung 18 mit der Niederdruckseite und bildet dementsprechend eine niederdruckseitige Kammer 19. Im Betrieb der Brennkraftmaschine 4 gelangt der von ihr erzeugte Luftschall 10 hochdruckseitig durch die Kopplungsleitung 18 in die hochdruckseitige Kammer 19 und regt die Wand 13 bzw. die Membran 14 zu Schwingungen an. Diese Schwingungen erzeugen in der niederdruckseitigen Kammer 19 korrespondierende Druckpulsationen, die sich über die niederdruckseitige Kopplungsleitung 18 in der Niederdruckseite ausbreiten.

Die jeweilige Kammer 19 kann, insbesondere zusammen mit der jeweiligen Kopplungsleitung 18, einen Resonator, insbesondere einen Helmholtzresonator bilden, der hinsichtlich eines gewünschten Klangbildes abgestimmt sein kann.

Es ist klar, dass die in den Fig. 2 bis 4 gezeigte niederdruckseitigen und hochdruckseitigen Anbindungsstellen rein exemplarisch genannt sind. Zur Ausbildung der schwingungsfähigen Wand 13 bzw. der schwingungsfähigen Membran 14 eignen sich bevorzugt relativ großflächige Wandabschnitte von entsprechenden Komponenten der Frischgasanlage 1. Bevorzugt handelt es sich hierbei um Gehäuseabschnitte, so z.B. beim Frischgasverteiler 11 und beim Frischgasfilter 6 bei den Ausführungsformen der Fig. 2 bis 4. Dadurch ist die Auswahl für die Positionierung der jeweiligen Kopplungsstellen etwas eingeschränkt. Durch die Verwendung der Kopplungsleitung 18 ergeben sich verbesserte Möglichkeiten, da die Kopplungsleitung 18 selbst mit einer vergleichsweise kleinflächigen Anbindungsstelle zur Kommunikation mit der Hochdruckseite bzw. mit der Niederdruckseite auskommt. Die Verwendung der Kopplungseinrichtung 20 gemäß der in Fig. 5 gezeigten Ausführungsform ermöglicht es, die Kopplungsleitung 18 hochdruckseitig und niederdruckseitig mit relativ kleinen Anbindungsstellen kommunizierend anzuschließen, da die vergleichsweise großflächige Wand 13 bzw. Membran 14 in der Kopplungseinrichtung 20 angeordnet ist, die von den genannten Anbindungsstellen der Kopplungsleitung 18 grundsätzlich unabhängig positioniert werden kann.

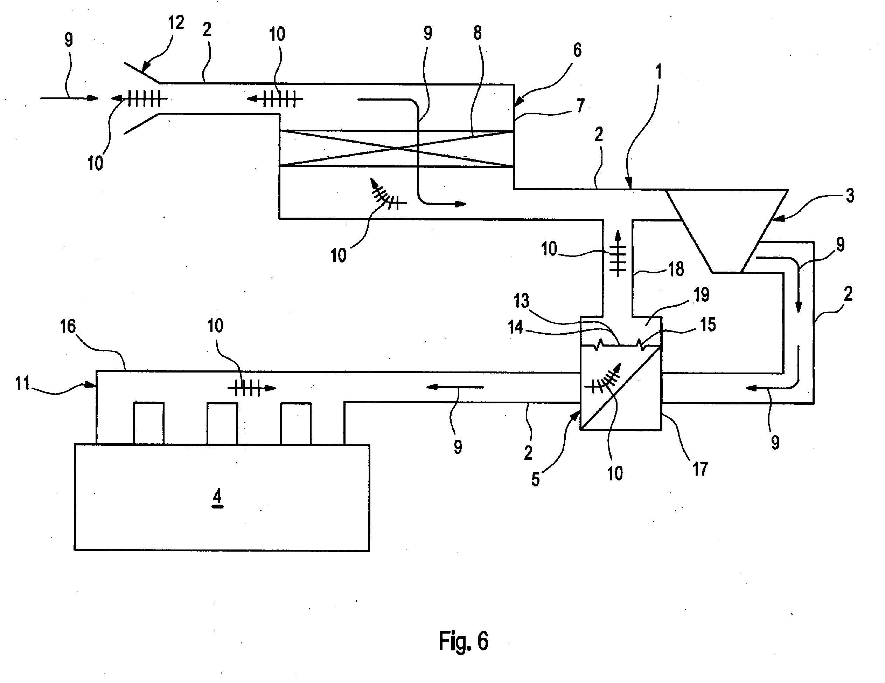

Beispielhaft ist in Fig. 5 gezeigt, dass die Kopplungsleitung 18 auch an die Frischgasleitung 2 stromab der Ladeeinrichtung 3 und hier zusätzlich stromab des Wärmeübertragers 5 anschließbar ist. Bei der in Fig. 6 gezeigten Ausführungsform ist die Wand 13 bzw. die Membran 14 durch einen Wandabschnitt des Gehäuses 17 des Wärmeübertragers 5 gebildet. Die Kammer 19 umschließt diese Wand 13 bzw. Membran 14 und ist über die Kopplungsleitung 18 an die Frischgasleitung 2 stromauf der Ladeeinrichtung 3 und vorzugsweise stromab des Frischgasfilters 6 angeschlossen.

Bei den Ausführungsformen der Fig. 2 bis 6 erfolgt die akustische Kopplung mit Hilfe der Kopplungsleitung 18, die hierzu mit der Niederdruckseite und/oder mit der Hochdruckseite kommuniziert. Unter einer kommunizierenden Verbindung wird im vorliegenden Zusammenhang eine offene Anbindung verstanden, die grundsätzlich einen Gasaustausch ermöglicht. Die Übertragung der Druckpulsationen der Hochdruckseite auf die Niederdruckseite erfolgt dabei innerhalb der Kopplungsleitung 18 in Form von Luftschall.

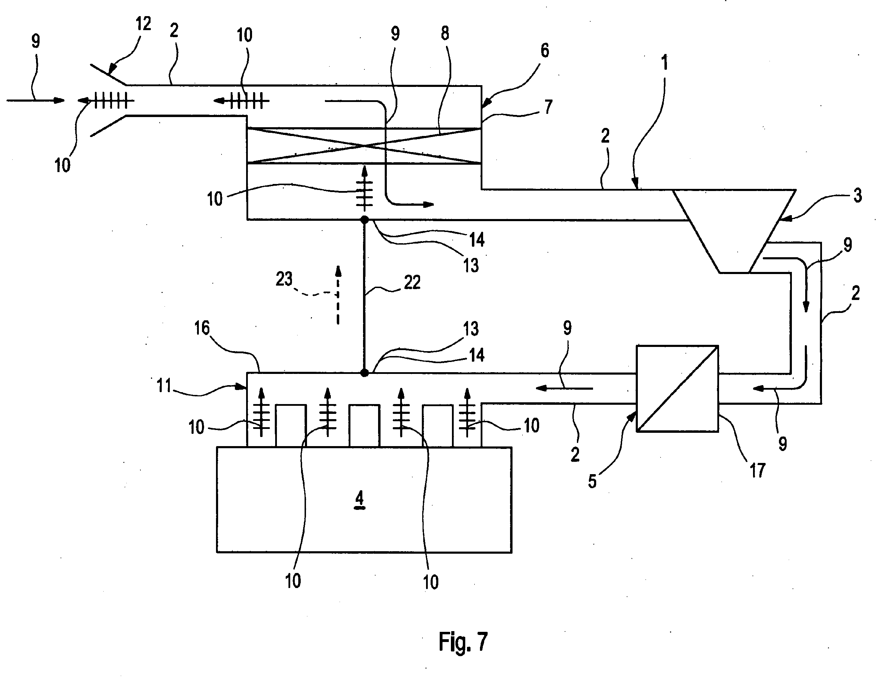

Bei der in Fig. 7 gezeigten Ausführungsform ist ein Kopplungskörper 22 vorgesehen, der einerseits mit der Hochdruckseite und andererseits mit der Niederdruckseite zur Übertragung von im Frischgas transportierten Druckpulsationen gekoppelt ist. Dieser Kopplungskörper 22 ist dabei so ausgestaltet, dass er eine Körperschallbrücke zwischen der Hochdruckseite und der Niederdruckseite bildet. Die Körperschaltausbreitung im Kopplungskörper 22 ist durch einen unterbrochenen Pfeil 23 angedeutet. Vorzugsweise ist der Kopplungskörper 22 hierzu mit einer an der Hochdruckseite, hier am Frischgasverteiler 11, angeordneten Wand 13 bzw. Membran 14 zur Schwingungsübertragung verbunden. Ebenso ist der Kopplungskörper 22 mit einer der Niederdruckseite, hier am Frischgasfilter 6, angeordneten Wand 13 bzw. Membran 14 zur Schwingungsübertragung verbunden. Der Kopplungskörper 22 arbeitet wie folgt: Die Druckpulsationen der Hochdruckseite regen über die hochdruckseitige Wand 13 bzw. Membran 14 den Kopplungskörper 22 zu Schwingungen an, die dieser als Körperschall auf die niederdruckseitige Wand 13 bzw. Membran 14 überträgt, wodurch diese an der Niederdruckseite die entsprechenden Druckpulsationen erzeugt. Der Kopplungskörper 22 ist vergleichsweise steif oder starr ausgestaltet.

## Patentansprüche

1. Frischgasanlage für eine Brennkraftmaschine, insbesondere in einem Kraftfahrzeug,
- mit einer Frischgasleitung (2), in der eine Ladeeinrichtung (3) angeordnet ist,
- wobei eine stromab der Ladeeinrichtung (3) liegende Hochdruckseite der Frischgasanlage (1) mit einer stromauf der Ladeeinrichtung (3) liegenden Niederdruckseite der Frischgasanlage (1) zur gasdichten Übertragung von im Frischgas transportierten Druckpulsationen gekoppelt ist.

2. Frischgasanlage nach Anspruch 1,
**dadurch gekennzeichnet,**
**dass** die Druckpulsationen übertragende Kopplung mittels wenigstens einer schwingungsfähigen, gasdichten Wand (13) erfolgt, die einerseits die Hochdruckseite und andererseits die Niederdruckseite begrenzt.

3. Frischgasanlage nach Anspruch 2,
**dadurch gekennzeichnet,**
**dass** die schwingungsfähige Wand (13) oder zumindest eine schwingungsfähige Wand (13) eine gasdichte Membran (14) ist, die schwingungsfähig ausgestaltet und/oder schwingungsfähig gehalten ist.

4. Frischgasanlage nach Anspruch 2 oder 3,
**dadurch gekennzeichnet,**
- **dass** die Wand (13) oder die Membran (14) bei einer Komponente (2, 5, 6, 11, 12) der Frischgasanlage (1) durch einen Wandabschnitt gebildet ist, oder
- **dass** die Wand (13) oder die Membran (14) bei zwei verschiedenen Komponenten (2, 5, 6, 16, 12) der Frischgasanlage (1) durch einen gemeinsamen Wandabschnitt gebildet ist.

5. Frischgasanlage nach einem der Ansprüche 2 bis 4,
**dadurch gekennzeichnet,**
**dass** die Wand (13) oder die Membran (14) durch einen Wandabschnitt eines Gehäuses (7) eines niederdruckseitig in der Frischgasleitung (2) angeordneten Frischgasfilters (6) und/oder eines Gehäuses (16) eines die Frischgasleitung (2) mit der Brennkraftmaschine (4) verbindenden Frischgasverteilers (11) und/oder eines Gehäuses (17) eines hochdruckseitig in der Frischgasleitung (2) angeordneten, zur Kühlung des aufgeladenen Frischgases dienenden Wärmeübertragers (5) und/oder der Frischgasleitung (2) gebildet ist.

6. Frischgasanlage nach einem der Ansprüche 1 bis 5,
**dadurch gekennzeichnet,**
**dass** eine Kopplungsleitung (18) vorgesehen ist, die sich zwischen der Hochdruckseite und der Niederdruckseite zur Übertragung von Druckpulsationen erstreckt.

7. Frischgasanlage nach Anspruch 6,
**dadurch gekennzeichnet,**
- **dass** die Kopplungsleitung (18) einerseits mit der Hochdruckseite kommuniziert und andererseits zur Übertragung der im Frischgas transportierten Druckpulsationen mit der Niederdruckseite gekoppelt ist, oder
- **dass** die Kopplungsleitung (18) einerseits zur Übertragung der im Frischgas transportierten Druckpulsationen mit der Hochdruckseite gekoppelt ist und andererseits mit der Niederdruckseite kommuniziert, oder
- **dass** die Kopplungsleitung (18) einerseits zur Übertragung der im Frischgas transportierten Druckpulsationen mit der Hochdruckseite gekoppelt ist und andererseits zur Übertragung der im Frischgas transportierten Druckpulsationen mit der Niederdruckseite gekoppelt ist.

8. Frischgasanlage nach einem der Ansprüche 2 bis 5 und nach Anspruch 6 oder 7,
**dadurch gekennzeichnet,**
**dass** die Kopplungsleitung (18) mit wenigstens einer Kammer (19) kommuniziert, welche die Wand (13) oder die Membran (14) einfasst.

9. Frischgasanlage nach einem der Ansprüche 2 bis 8,
**dadurch gekennzeichnet,**
- **dass** eine Kopplungseinrichtung (20) vorgesehen ist, die ein Gehäuse (21) aufweist, das in eine Kopplungsleitung (18) eingebunden ist und in dem eine schwingungsfähige Wand (13) oder eine schwingungsfähig ausgestaltete oder schwingungsfähig gehaltene Membran (14) zwei Kammern (19) gasdicht voneinander trennt,
- **dass** die Wand (13) oder die Membran (14) die beiden Kammern (19) zur Übertragung von im Frischgas transportierten Druckpulsationen koppelt,
- **dass** die eine Kammer (19) über die Kopplungsleitung (18) mit der Hochdruckseite kommuniziert, während die andere Kammer (19) über die Kopplungsleitung (18) mit der Niederdruckseite kommuniziert.

10. Frischgasanlage nach einem der Ansprüche 1 bis 5,
**dadurch gekennzeichnet,**
**dass** ein Kopplungskörper (22) vorgesehen ist, der einerseits mit der Hochdruckseite und andererseits mit der Niederdrucksite zur Übertragung von im Frischgas transportierten Druckpulsationen gekoppelt ist und der als Körperschallbrücke zwischen Hochdruckseite und Niederdruckseite ausgestaltet ist.

11. Frischgasanlage nach Anspruch 10 und einem der Ansprüche 2 bis 5,
**dadurch gekennzeichnet,**
**dass** der Kopplungskörper (22) mit einer hochdruckseitigen Wand (13) oder Membran (14) und mit einer niederdruckseitigen Wand (13) oder Membran (14) zur Schwingungsübertragung verbunden ist.

## Claims

1. An air-intake device for an internal combustion engine, in particular in a motor vehicle,
- having a fresh-gas line (2) in which a charging device (3) is located,
- wherein a high-pressure side, which is positioned downstream from the charging device (3), of the air-intake device (1) is coupled to a low-pressure side, which is positioned upstream from the charging device (3), of the air-intake device (1) for the gas-tight transmission of pressure pulsations transported in the fresh mixture.

2. The air-intake device as specified in claim 1,
**characterised in that**
the coupling that transmits the pressure pulsations takes places by means of at least one gas-tight wall (13) that is capable of vibrating and that furthermore borders the high-pressure side as well as the low-pressure side.

3. The air-intake device as specified in claim 2,
**characterised in that**
the wall (13) that is capable of vibrating or at least one wall (13) that is capable of vibrating is a gas-tight membrane (14) that is configured as capable of vibrating and/or is held so that it is capable of vibrating.

4. The air-intake device as specified in claim 2 or claim 3,
**characterised in that**
- the wall (13) or the membrane (14) by a component (2, 5, 6, 11, 12) of the fresh-mixture installation (1) is formed by a wall section, or
- the wall (13) or the membrane (14) by two different components (2, 5, 6, 11, 12) of the fresh-mixture installation (1) is formed by a shared wall section.

5. The air-intake device as specified in any one of claims 2 to 4,
**characterised in that**
the wall (13) or the membrane (14) is formed by a wall section of a housing (7) of a fresh-gas filter (6), which is arranged in the fresh-gas line (2) on the low-pressure side, or is formed by a wall section of a housing (16) of a fresh-gas distributor (11) connecting the fresh-gas line (2) to the internal combustion engine (4), and/or is formed by a wall of a housing (17) of a heat exchanger (5), which is arranged in the fresh-gas line (2) on the high-pressure side and which furthermore serves to cool the charged fresh gas, and/or is formed by a wall section of the fresh-gas line (2).

6. The air-intake device as specified in any one of claims 1 to 5,
**characterised in that**
a coupling line (18) is provided that extends between the high-pressure side and the low-pressure side for transmitting pressure pulsations.

7. The air-intake device as specified in claim 6,
**characterised in that**
- the coupling line (18) communicates with the high-pressure side and is furthermore also coupled to the low-pressure side in order to transmit the pressure pulsations transported in the fresh gas, or
- the coupling line (18) is coupled to the high-pressure side in order to transmit the pressure pulsations transported in the fresh gas and furthermore also communicates with the low-pressure side, or
- the coupling line (18) is coupled to the high-pressure side in order to transmit the pressure pulsations transported in the fresh gas and is furthermore also coupled to the low-pressure side in order to transmit the pressure pulsations transported in the fresh gas.

8. The air-intake device as specified in any one of the claims 2 to 5 and as specified in claim 6 or claim 7,
**characterised in that**
the coupling line (18) communicates with at least one chamber (19) that encloses the wall (13) or the membrane (14).

9. The air-intake device as specified in any one of the claims 2 to 8,
**characterised in that**
- a coupling device (20) is provided that has a housing (21) that is contained in a coupling line (18) and in which a wall (13), which is capable of vibrating, or a membrane (14), which is configured to be capable of vibrating or is held to be capable of vibrating, separates two chambers (19) from one another in a gas-tight manner,
- the wall (13) or the membrane (14) couples the two chambers (19) for the transmission of pressure pulsations transported in the fresh gas,
- the one chamber (19) communicates with the high-pressure side by means of the coupling line (18), while the other chamber (19) communicates with the low-pressure side by means of the coupling line (18).

10. The air-intake device as specified in any one of the claims 1 to 5,
**characterised in that**
a coupling body (22) is provided that is connected to the high-pressure side as well as to the low-pressure side in order to transmit the pressure pulsations transported in the fresh gas and which coupling body is furthermore configured as a point for the introduction of structure-bome sound between the high-pressure side and the low-pressure side.

11. The air-intake device as specified in claim 10 and any one of the claims 2 to 5,
**characterised in that**
the coupling body (22) is connected to a wall (13) or membrane (14), which is respectively on the high-pressure side, and to a wall (13) or membrane (14), which is respectively on the low-pressure side, for the purpose of transmitting vibration.

## Revendications

1. Installation de gaz frais d'un moteur à combustion interne, notamment dans un véhicule automobile,
- comportant une conduite de gaz frais (2), dans laquelle un dispositif de charge (3) est disposé,
- moyennant quoi un côté à haute pression de l'installation de gaz frais (1) situé en aval du dispositif de charge (3) est couplé à un côté à basse pression de l'installation de gaz frais (1) situé en amont du dispositif de charge (3) à des fins de transmission étanche au gaz des pulsations de pression transportées dans le gaz frais.

2. Installation de gaz selon la revendication 1,
**caractérisée en ce que**
le couplage transmettant les pulsations de pression s'effectue au moyen d'au moins une paroi (13) étanche au gaz, vibratoire, qui délimite d'un côté le côté à haute pression et d'un autre côté le côté à basse pression.

3. Installation de gaz selon la revendication 2,
**caractérisée en ce que**
la paroi vibratoire (13) ou au moins une paroi vibratoire (13) est une membrane (14) étanche au gaz, qui est configurée de manière vibratoire et/ou maintenue de manière vibratoire.

4. Installation de gaz selon la revendication 2 ou 3,
**caractérisée en ce que**
- la paroi (13) ou la membrane (14) est formée sur un composant (2, 5, 6, 11, 12) de l'installation de gaz frais (1) par une portion de paroi, ou
- la paroi (13) ou la membrane (14) sur deux composants différents (2, 5, 6, 11, 12) de l'installation de gaz frais (1) est formée par une portion de paroi commune.

5. Installation de gaz frais selon une des revendications 2 à 4,
**caractérisée en ce que**
la paroi (13) ou la membrane (14) est formée par une portion de paroi d'un logement (7) d'un filtre de gaz frais (6) disposé du côté à basse pression dans la conduite de gaz frais (2) et/ou d'un logement (16) d'un distributeur de gaz frais (11) reliant la conduite de gaz frais (2) avec le moteur à combustion interne (4) et/ou d'un logement (17) d'un échangeur de chaleur (5) servant à refroidir le gaz frais chargé, disposé dans la conduite de gaz frais (2) du côté à haute pression et/ou de la conduite de gaz frais (2).

6. Installation de gaz frais selon une des revendications 1 à 5,
**caractérisée en ce que**
une conduite de couplage (18) est prévue, laquelle s'étend entre le côté à haute pression et le côté à basse pression à des fins de transmission des pulsations de pression.

7. Installation de gaz frais selon la revendication 6,
**caractérisé en ce que**
- la conduite de couplage (18) communique d'un côté avec le côté à haute pression et de l'autre côté à des fins de transmission des pulsations de pression transportées dans le gaz frais avec le côté à basse pression, ou
- la conduite de couplage (18) communique d'un côté à des fins de transmission des pulsations de pression transportées dans le gaz frais avec le côté à haute pression et de l'autre côté avec le ôté à basse pression, ou
- la conduite de couplage (18) est couplée d'un côté à des fins de transmission des pulsations de pression transportées dans le gaz frais avec le côté à haute pression et de l'autre côté à des fins de transmission des pulsations de pression transportées dans le gaz frais avec le côté à basse pression.

8. Installation de gaz frais selon une des revendications 2 à 5 et selon la revendication 6 ou 7,
**caractérisée en ce que**
la conduite de couplage (18) communique avec au moins une chambre (19), laquelle encadre la paroi (13) ou la membrane (14).

9. Installation de gaz frais selon une des revendications 2 à 8,
**caractérisée en ce que**
- un dispositif de couplage (20) est prévu, lequel présente un logement (21), qui est intégré à une conduite de couplage (18) et dans lequel une paroi vibratoire (13) ou une membrane (14) configurée de manière vibratoire ou maintenue de manière vibratoire sépare deux chambres (19) l'une de l'autre de manière étanche au gaz,
- la paroi (13) ou la membrane (14) couple les deux chambres (19) à des fins de transmission des pulsations de pression transportées dans le gaz frais,
- une des chambres (19) communique par l'intermédiaire de la conduite de couplage (18) avec le côté à haute pression, alors que l'autre chambre (19) communique par l'intermédiaire de la conduite de couplage (18) avec le côté à basse pression.

10. Installation de gaz frais selon une des revendications 1 à 5,
**caractérisée en ce que**
un corps de couplage (22) est prévu, lequel est couplé d'un côté au côté à haute pression et de l'autre côté au côté à basse pression à des fins de transmission des pulsations de pression transportées dans le gaz frais et est configuré comme un pont de mesure acoustique entre le côté à haute pression et le côté à basse pression.

11. Installation de gaz frais selon la revendication 10 et une des revendications 2 à 5,
**caractérisée en ce que**
le corps de couplage (22) est relié avec une paroi (13) ou une membrane (14) du côté à haute pression et avec une paroi (13) ou une membrane (14) du côté à basse pression à des fins de transmission de vibrations.
